# EUROPÄISCHE PATENTSCHRIFT

(11) **EP 2 009 881 B1**
(45) Veröffentlichungstag und Bekanntmachung des Hinweises auf die Patenterteilung: **22.11.2017**
(21) Anmeldenummer: 08011460.6
(22) Anmeldetag: 25.06.2008
(51) Int. Cl.: H04M 1/2745

(54) **Erfassung von Kontaktierungsinformationen von Telekommunikationsnetznutzern**
Recording of contact information from telecommunication network users
Détection d'informations de mise en contact d'abonnés à un réseau de télécommunication

(30) Priorität: 26.06.2007 DE 102007029585
(43) Veröffentlichungstag der Anmeldung: 31.12.2008
(73) Patentinhaber: Vodafone Holding GmbH, 40213 Düsseldorf (DE)
(72) Erfinder: Jeffery, Phil, 40477 Düsseldorf (DE); Brücklmeier, Ralf, 40468 Düsseldorf (DE)
(74) Vertreter: Weisbrodt, Bernd

(56) Entgegenhaltungen:
- US-A1- 2003 220 095
- US-A1- 2005 226 468
- US-A1- 2006 285 663

## Beschreibung

Die vorliegende Erfindung betrifft Verfahren zur zumindest teilautomatischen Erfassung wenigstens einer Kontaktierungsinformation eines Telekommunikationsnetznutzers in einem Telekommunikationsnetz seitens eines in einem Telekommunikationsnetz nutzbaren Endgerätes.

Ferner betrifft die vorliegende Erfindung ein Endgerät zur Nutzung in einem Telekommunikationsnetz, mit einer Einrichtung zur Erfassung wenigstens einer biometrischen Information einer Person, welches ausgebildet und/oder eingerichtet ist, ein erfindungsgemäßes Verfahren zumindest teilweise auszuführen.

Gegenstand der vorliegenden Erfindung ist darüber hinaus ein Netzknoten eines Telekommunikationsnetzes, welcher ausgebildet und/oder eingerichtet ist, ein erfindungsgemäßes Verfahren zumindest teilweise auszuführen.

Die Erfassung von Kontaktierungsinformationen von Telekommunikationsnetznutzern in einem Telekommunikationsnetz seitens in Telekommunikationsnetzen nutzbare Endgeräte macht bisher aufwändige Tasteneingaben seitens der mobilen Endgeräte erforderlich. So müssen entsprechende Kontaktierungsinformationen beispielsweise von dem einen Telekommunikationsnetznutzer dem anderen Telekommunikationsnetznutzer mitgeteilt und von diesem dann seitens des eigenen Endgerätes erfasst werden. Weiters sind aus US 2006/285663 A1, US2005/226468 A1 und US 2003/220095 A1 Konzepte bekannt, bei denen biometrische Informationen von Nutzern erfasst werden. Der vorliegenden Erfindung liegt in Anbetracht dieses Standes der Technik die Aufgabe zugrunde, die Erfassung von Kontaktierungsinformationen von Telekommunikationsnetznutzern in einem Telekommunikationsnetz seitens in Telekommunikationsnetzen nutzbarer Endgeräte zu verbessern.

Zur technischen Lösung wird mit der vorliegenden Erfindung ein Verfahren zur zumindest teilautomatischen Erfassung wenigstens einer Kontaktierungsinformation eines Telekommunikationsnetznutzers in einem Telekommunikationsnetz seitens eines in einem Telekommunikationsnetz nutzbaren Endgerätes vorgeschlagen, wobei das Endgerät eine Einrichtung zur Erfassung wenigstens einer biometrischen Information einer Person aufweist und seitens des Endgerätes folgende Verfahrensschritte ausgeführt werden:
- Erfassung wenigstens einer biometrischen Information einer Person,
- Sendung der erfassten Information an das Telekommunikationsnetz mittels eines Nachrichtendienstes des Telekommunikationsnetzes,
- Empfang einer wenigstens eine Kontaktierungsinformation der Person in einem Telekommunikationsnetz aufweisenden Nachricht mittels eines Nachrichtendienstes des Telekommunikationsnetzes und
- Speicherung der Kontaktierungsinformation der Person in einem Telekommunikationsnetz.

Zur technischen Lösung wird mit der vorliegenden Erfindung ferner ein Verfahren zur zumindest teilautomatischen Erfassung wenigstens einer Kontaktierungsinformation eines Telekommunikationsnetznutzers in einem Telekommunikationsnetz seitens eines in einem Telekommunikationsnetz nutzbaren Endgerätes vorgeschlagen, wobei seitens des Telekommunikationsnetzes folgende Verfahrensschritte ausgeführt werden:
- Empfang einer wenigstens eine biometrische Information einer Person aufweisenden Nachricht mittels eines Nachrichtendienstes des Telekommunikationsnetzes,
- Vergleich der empfangenden biometrischen Information mit in wenigstens einer Datenbank verfalteten biometrischen Informationen von Telekommunikationsnetznutzern, wobei in der Datenbank wenigstens einer biometrischen Information eines Telekommunikationsnetznutzers wenigstens eine Kontaktierungsinformation des Telekommunikationsnetznutzers in einem Telekommunikationsnetz zugeordnet ist und
- bei Übereinstimmung der empfangenen biometrischen Information mit einer in der Datenbank verwalteten biometrischen Information Sendung einer die wenigstens eine Kontaktierungsinformation aufweisenden Nachricht an das Endgerät, welches die empfangene Nachricht gesendet hat, mittels eines Nachrichtendienstes des Telekommunikationsnetzes.

Mit der vorliegenden Erfindung wird ferner ein Verfahren zur Erzeugung von Datenbankeinträgen in einer biometrische Informationen von Telekommunikationsnetznutzern verwaltenden Datenbank, welches zur Nutzung im Zusammenhang mit einem erfindungsgemäßen Verfahren zur zumindest teilautomatischen Erfassung wenigstens einer Kontaktierungsinformation eines Telekommunikationsnetznutzers in einem Telekommunikationsnetz seitens eines in einem Telekommunikationsnetz nutzbaren Endgerätes vorgesehen ist, vorgeschlagen, wobei ein Telekommunikationsnetznutzer mit seinem in einem Telekommunikationsnetz nutzbaren Endgerät, welches eine Einrichtung zur Erfassung wenigstens einer biometrischen Information einer Person aufweist, wenigstens eine biometrische Information von sich erfasst, die erfasste biometrische Information gemeinsam mit wenigstens einer Kontaktierungsinformation des Telekommunikationsnetznutzers in dem Telekommunikationsnetz mittels eines Nachrichtendienstes des Telekommunikationsnetzes an das Telekommunikationsnetz sendet und seitens des Telekommunikationsnetzes die biometrische Information und die Kontaktierungsinformation einander zugeordnet in einer Datenbank gespeichert werden.

Der vorliegenden Erfindung liegt die Erkenntnis zugrunde, dass eine verbesserte und einfachere Erfassung von Kontaktierungsinformationen von Telekommunikationsnetznutzern in einem Telekommunikationsnetz seitens in Telekommunikationsnetzen nutzbare Endgeräte dadurch erzielbar ist, dass entsprechende Kontaktierungsinformationen zwischen Telekommunikationsnetznutzern durch einfache Weitergabe der biometrischen Information an den jeweils anderen Telekommunikationsnetznutzer erfolgen kann. Erfindungsgemäß ist durch die Einschaltung einer die biometrischen Informationen verwaltenden Datenbank darüber hinaus ein Kontroll- und/oder Authentisierungsdienst gegeben, der die Authentizität der Kontaktierungsinformationen für die jeweiligen Nutzer weiter steigert.

Vorteilhafterweise umfasst die Kontaktierungsinformation die Rufnummer, vorzugsweise die sogenannte MSISDN (MSISDN: Mobile Subscriber ISDN: Integrated Services Digital Network), des Telekommunikationsnetznutzers in einem Telekommunikationsnetz.

Vorteilhafterweise ist die wenigstens eine Datenbank eine Datenbank des Telekommunikationsnetzes, zumindest aber eine über das Telekommunikationsnetz erreichbare Datenbank.

Eine weitere Ausgestaltung der Erfindung sieht vor, dass die Einrichtung zur Erfassung wenigstens einer biometrischen Information einer Person ein Scanner zur Erfassung von Fingerabdrücken ist.

Vorteilhafterweise ist das Telekommunikationsnetz ein Mobilfunknetz gemäß einem GSM-; GPRS- und/oder UMTS-Funknetzstandard.

Eine weitere bevorzugte Ausgestaltung der Erfindung ist gekennzeichnet durch einen Kurzmitteilungsdienst (SMS: Short Message Service) und/oder einen Multimediamitteilungsdienst (MMS: Multimedia Messaging Service) als Nachrichtendienst des Telekommunikationsnetzes.

Zur technischen Lösung der eingangs genannten Aufgabe wird mit der vorliegenden Erfindung ferner ein Endgerät zur Nutzung in einem Telekommunikationsnetz, mit einer Einrichtung zur Erfassung wenigstens einer biometrischen Information einer Person vorgeschlagen, welches dadurch gekennzeichnet ist, dass dieses ausgebildet und/oder eingerichtet ist, ein erfindungsgemäßes Verfahren zumindest teilweise auszuführen. Vorteilhafterweise ist das Endgerät ein mobiles Endgerät.

Gegenstand der vorliegenden Erfindung ist darüber hinaus ein Netzknoten eines Telekommunikationsnetzes, welcher ausgebildet und/oder eingerichtet ist, ein erfindungsgemäßes Verfahren zumindest teilweise auszuführen.

Weitere Einzelheiten, Merkmale und Vorteile der Erfindung werden nachfolgend anhand der in den Fig. der Zeichnung dargestellten Ausführungsbeispiele näher erläutert. Dabei zeigen:
- Fig. 1: in einer schematischen Prinzipdarstellung ein Verfahren zur Erzeugung von Datenbankeinträgen biometrischer Informationen von Telekommunikationsnetznutzern und
- Fig. 2: in einer schematischen Prinzipdarstellung eine erfindungsgemäße Erfassung von Kontaktierungsinformationen eines Telekommunikationsnetznutzers.

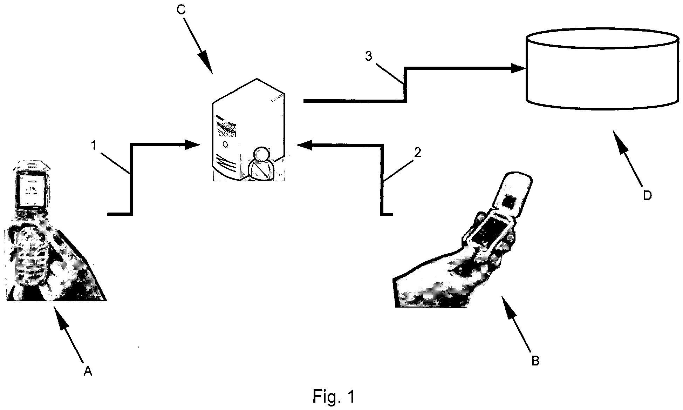

Fig. 1 zeigt die Erzeugung von Datenbankeinträgen in einer biometrische Informationen von Telekommunikationsnetznutzern A und B verwaltenden Datenbank D. Die Telekommunikationsnetznutzern A und B nutzen dazu in einem Telekommunikationsnetz betreibbare Endgeräte A und B. Die Endgeräte A und B weisen dazu jeweils eine Einrichtung zur Erfassung wenigstens einer biometrischen Information einer Person auf. Die Einrichtung zur Erfassung wenigstens einer biometrischen Information einer Person ist dabei vorliegend als ein Scanner zur Erfassung von Fingerabdrücken ausgebildet, welcher seitens des jeweiligen Endgerätes A beziehungsweise B integriert ist. Das Endgerät A beziehungsweise B zur Nutzung in einem Telekommunikationsnetz ist vorliegend als ein in einem Mobilfunknetz gemäß einem GSM-, GPRS- und/oder UMTS-Funknetzstandard betreibbares mobiles Endgerät in Form eines Mobilfunktelefons A beziehungsweise B ausgebildet.

Im Rahmen der Erzeugung von Datenbankeinträgen in der biometrische Informationen von Telekommunikationsnetznutzern verwaltenden Datenbank D müssen die entsprechenden Telekommunikationsnutzer A beziehungsweise B ihre eigenen biometrischen Informationen zunächst erfassen und diese dann über das Telekommunikationsnetz an eine den erfindungsgemäßen Dienst ausführende Einrichtung C, vorliegend einem sogenannten Application Server C, welche unter anderem die Datenbank D verwaltet, senden.

In dem mit 1 gekennzeichneten Verfahrensschritt erfasst der Nutzer A seine biometrischen Informationen seitens seines entsprechenden Endgerätes A und überträgt diese mittels eines Nachrichtendienstes des Telekommunikationsnetzes, vorliegend mittels einer MMS, über das Telekommunikationsnetz an die den erfindungsgemäßen Dienst realisierenden Einrichtung C. Gleiches macht der Nutzer B mit seinem Endgerät B in dem mit 2 gekennzeichneten Verfahrensschritt. Die Einrichtung (Application-Server) C speichert in Verfahrensschritt 3 die entsprechend von den Nutzern A beziehungsweise B erhaltenden biometrischen Informationen zusammen mit Kontaktierungsinformationen der Nutzer A beziehungsweise B in der Datenbank D. Die zusammen mit den biometrischen Informationen der Nutzer A beziehungsweise B erfassten Kontaktierungsinformationen umfassen dabei insbesondere die Rufnummern der Nutzer A beziehungsweise B in dem Telekommunikationsnetz, vorliegend insbesondere die sogenannte MSISDN des Nutzers A beziehungsweise des Nutzers B. Als biometrische Informationen werden vorliegend Fingerabdrücke der Nutzer A beziehungsweise B verwendet, welche mittels einer dazu vorgesehen Scannereinrichtung des Endgerätes A beziehungsweise des Endgerätes B erfasst werden.

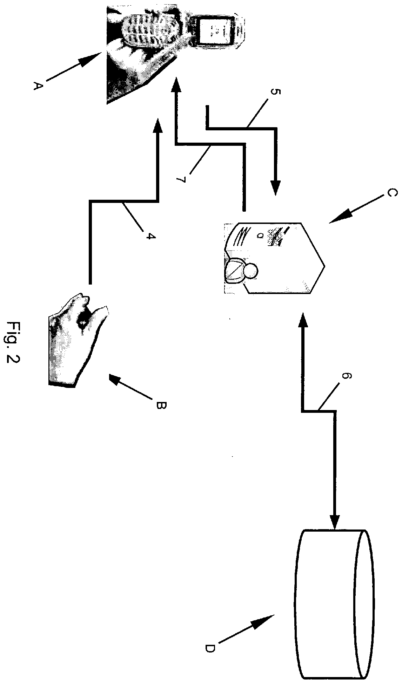

Fig. 2 zeigt wie Telekommunikationsnetznutzer Kontaktierungsinformationen in Telekommunikationsnetzen untereinander erfindungsgemäß austauschen können. Hierzu erfasst das Endgerät A des Nutzers A in Verfahrensschritt 4 biometrische Informationen des Nutzers B. Vorliegend wird dabei seitens des Endgerätes A des Nutzers A der Fingerabdruck des Nutzers B erfasst, vorliegend in dem der Nutzer B seinen Finger auf die Scanneinrichtung des Endgerätes A des Nutzers A auflegt und das Endgerät A den Fingerabdruck des Nutzers B einscannt. Der so von dem Endgerät A des Nutzers A erfasste Fingerabdruck des Nutzers B wird in Verfahrensschritt 5 an die den erfindungsgemäßen Dienst realisierende Einrichtung C über das Telekommunikationsnetz übertragen. Seitens der Einrichtung C wird daraufhin anhand der mit Verfahrensschritt 5 von dem Nutzer A des Endgerätes A übertragenen biometrischen Informationen des Nutzers B in der Datenbank ein Vergleich der biometrischen Informationen des Nutzers B durchgeführt. Bei Vorhandensein der entsprechenden biometrischen Information des Nutzers B in der Datenbank D liefert die Datenbank D der Einrichtung C die zu der biometrischen Information B des Nutzes B in der Datenbank D erfasste Kontaktierungsinformation des Nutzers A, vorliegend die MSISDN des Nutzers A (vergleiche Fig. 1). Die ermittelte Kontaktierungsinformation (MSISDN) des Nutzers B wird anschießend von der den erfindungsgemäßen Dienst realisierenden beziehungsweise umsetzenden Einrichtung C im Verfahrensschritt 7 über das Telekommunikationsnetz mittels eines Nachrichtendienstes des Telekommunikationsnetzes, vorliegend mittels einer sogenannten SMS, an das Endgerät A des Nutzers A übertragen und kann so von dem Nutzer A seitens des Endgerätes A gespeichert werden. Vorteilhafterweise erfolgt die Speicherung der Kontaktierungsinformation des Nutzers B automatisch mit Empfang der Kontaktierungsinformation B des Nutzers B seitens des Endgerätes A des Nutzers A im Verfahrensschritt 7 beziehungsweise dem Anschluss an diesen Verfahrensschritt.

Die in den Fig. der Zeichnung dargestellten Ausführungsbeispiele dienen lediglich der Erläuterung der Erfindung und sind für diese nicht beschränkend.

### Bezugszeichenliste

- A: Endgerät/Nutzer
- B: Endgerät/Nutzer
- C: Dienstverwirklichende Einrichtung/Application-Server
- D: Datenbank

- 1: Verfahrensschritt Erfassung biometrischer Daten (Initialisierung Nutzer A)
- 2: Verfahrensschritt Erfassung biometrischer Daten (Initialisierung Nutzer B
- 3: Verfahrensschritt Erzeugung Datenbankeinträge
- 4: Verfahrensschritt Erfassung biometrischer Informationen für Kontaktierungsinformationsbestimmung
- 5: Verfahrensschritt Anfrage Kontaktierungsinformationsbestimmung
- 6: Verfahrensschritt Bestimmung Kontaktierungsinformation
- 7: Verfahrensschritt Mitteilung Kontaktierungsinformation

## Patentansprüche

1. Verfahren zur zumindest teilautomatischen Erfassung wenigstens einer Kontaktierungsinformation eines Telekommunikationsnetznutzers in einem Telekommunikationsnetz seitens eines in einem Telekommunikationsnetz nutzbaren Endgerätes, wobei das Endgerät eine Einrichtung zur Erfassung wenigstens einer biometrischen Information einer Person aufweist, umfassend die folgenden Verfahrensschritte:
- Erfassung wenigstens einer biometrischen Information des Telekommunikationsnetznutzers,
- Senden der erfassten biometrischen Information gemeinsam mit wenigstens einer Kontaktierungsinformation des Telekommunikationsnetznutzers in dem Telekommunikationsnetz an das Telekommunikationsnetz,
- Speicherung der einander zugeordneten biometrischen Information und der Kontaktierungsinformation des Telekommunikationsnetznutzers seitens des Telekommunikationsnetzes in einer Datenbank,
- Erfassung wenigstens einer biometrischen Information einer Person durch das Endgerät,
- Sendung der erfassten Information an das Telekommunikationsnetz,
- Empfang der wenigstens eine biometrische Information einer Person aufweisenden Nachricht vom Telekommunikationsnetz,
- Vergleich der mittels der Nachricht empfangenen biometrischen Information mit in wenigstens einer Datenbank verwalteten biometrischen Informationen von Telekommunikationsnetznutzern durch das Telekommunikationsnetz, wobei in der Datenbank wenigstens einer biometrischen Information eines Telekommunikationsnetznutzers wenigstens eine Kontaktierungsinformation des Telekommunikationsnetznutzers in dem Telekommunikationsnetz zugeordnet ist,
- Sendung einer die wenigstens eine Kontaktierungsinformation aufweisenden Nachricht an das Endgerät, welches die empfangene Nachricht gesendet hat, falls die empfangene biometrische Information mit einer in der Datenbank verwalteten biometrischen Information übereinstimmt,
- Empfang der wenigstens eine Kontaktierungsinformation der Person in dem Telekommunikationsnetz aufweisenden Nachricht seitens des Endgerätes, und
- Speicherung der aus dem Telekommunikationsnetz empfangenen Kontaktierungsinformation der Person in einem Telekommunikationsnetz seitens des Endgerätes,
**dadurch gekennzeichnet, dass**
das Senden der erfassten biometrischen Information gemeinsam mit wenigstens einer Kontaktierungsinformation des Telekommunikationsnetznutzers in dem Telekommunikationsnetz an das Telekommunikationsnetz,
die Sendung der erfassten Information an das Telekommunikationsnetz,
der Empfang der wenigstens eine biometrische Information einer Person aufweisenden Nachricht vom Telekommunikationsnetz, und
der Empfang der wenigstens eine Kontaktierungsinformation der Person in dem Telekommunikationsnetz aufweisenden Nachricht seitens des Endgerätes
mittels eines Nachrichtendienstes des Telekommunikationsnetzes erfolgt, wobei als Nachrichtendienst des Telekommunikationsnetzes ein Kurzmitteilungsdienst, SMS, und/oder Multimediamitteilungsdienst, MMS, vorgesehen ist,
wobei das Endgerät eines Nutzers (A) die biometrische Information eines anderen Nutzers (B) erfasst, indem die biometrische Information des anderen Nutzers (B) seitens der Einrichtung zur Erfassung wenigstens einer biometrischen Information einer Person des Endgerätes des Nutzers (A) erfasst wird und das Endgerät des Nutzers (A) die erfasste biometrische Information des anderen Nutzers (B) an das Telekommunikationsnetz überträgt.

2. Verfahren nach Anspruch 1, **dadurch gekennzeichnet, dass** die Kontaktierungsinformation die Rufnummer, MSISDN, des Telekommunikationsnetznutzers in einem Telekommunikationsnetz umfasst.

3. Verfahren nach Anspruch 1 oder Anspruch 2, **dadurch gekennzeichnet, dass** die wenigstens eine Datenbank eine Datenbank des Telekommunikationsnetzes, zumindest aber eine über das Telekommunikationsnetz erreichbare Datenbank ist.

4. Verfahren nach einem der Ansprüche 1 bis 3, **dadurch gekennzeichnet, dass** die Einrichtung zur Erfassung wenigstens einer biometrischen Information einer Person ein Scanner zur Erfassung von Fingerabdrücken ist.

5. Verfahren nach einem der Ansprüche 1 bis 4, **dadurch gekennzeichnet, dass** das Telekommunikationsnetz ein Mobilfunknetz gemäß einem GSM-, GPRS- und/oder UMTS-Funknetzstandard ist.

6. Endgerät zur Nutzung in einem Telekommunikationsnetz, mit einer Einrichtung zur Erfassung wenigstens einer biometrischen Information einer Person,
**dadurch gekennzeichnet, dass**
dieses ausgebildet und/oder eingerichtet ist, ein Verfahren nach einem der Ansprüche 1 bis 5 auszuführen.

7. Endgerät nach Anspruch 6, **dadurch gekennzeichnet, dass** dieses ein mobiles Endgerät ist.

8. Netzknoten eines Telekommunikationsnetzes,
**dadurch gekennzeichnet, dass**
dieser ausgebildet und/oder eingerichtet ist, ein Verfahren nach einem der Ansprüche 1 bis 5 auszuführen.

## Claims

1. A method for the at least partially automatic gathering of at least one contacting information item of a telecommunication network user in a telecommunication network by means of a terminal usable in a telecommunication network, wherein the terminal comprises a device for gathering at least one biometric information item of a person, comprising the following process steps:
- gathering at least one biometric information item of the telecommunication network user,
- sending the gathered biometric information item, together with at least one contacting information item of the telecommunication network user in the telecommunication network to the telecommunication network,
- storing the biometric information item and the contacting information item of the telecommunication network user, which have been allocated to each other by the telecommunication network, in a date base,
- gathering at least one biometric information item of a person by the terminal,
- sending the gathered information item to the telecommunication network,
- receiving the message comprising at least one biometric information item of a person from the telecommunication network,
- comparing the biometric information item received by means of the message with biometric information of telecommunication network users administrated in at least one data base by means of the telecommunication network, wherein in the data base at least one contacting information item of the telecommunication network user in the telecommunication network is allocated to at least one biometric information item of a telecommunication network user,
- sending a message comprising the at least one contacting information item to the terminal which has sent the received message, if the received biometric information item coincides with a biometric information item administrated in the data base,
- receiving the message comprising the at least one contacting information item of the person in the telecommunication network by the terminal, and
- storing the contacting information item of the person in a telecommunication network received from the telecommunication network by means of the terminal,
**characterized in that**
sending the gathered biometric information item, together with at least one contacting information item of the telecommunication network user in the telecommunication network, to the telecommunication network, sending the gathered information item to the telecommunication network,
receiving the message comprising at least one biometric information item of a person from the telecommunication network, and
receiving the message comprising at least one contacting information item of the person in the telecommunication network by means of the terminal
will be realized by means of a message service of the telecommunication network, wherein a short message service, SMS, and/or multimedia message service, MMS, is provided as message service of the telecommunication network,
wherein the terminal of a user (A) gathers the biometric information item of another user (B) **in that** the biometric information item of the other user (B) is gathered by the device for gathering at least one biometric information item of a person of the terminal of the user (A) and the terminal of the user (A) transmits the gathered biometric information item of the other user (B) to the telecommunication network.

2. A method according to claim 1, **characterized in that** the contacting information item includes the call number, MSISDN, of the telecommunication network user in a telecommunication network.

3. A method according to claim 1 or claim 2, **characterized in that** the at least one data base is a data base of the telecommunication network, but at least a data base that is reachable via the telecommunication network.

4. A method according to one of the claims 1 to 3, **characterized in that** the device for gathering at least one biometric information item of a person is a scanner for recording fingerprints.

5. A method according to one of the claims 1 to 4, **characterized in that** the telecommunication network is mobile radio network according to a GSM, GPRS and/or UMTS radio network standard.

6. A terminal for the use in a telecommunication network, comprising a device for gathering at least one biometric information item of a person,
**characterized in that**
this one is designed and/or adapted to carry out a method according to one of the claims 1 to 5.

7. A terminal according to claim 6, **characterized in that** this one is a mobile terminal.

8. A network node of a telecommunication network,
**characterized in that**
this one is designed and/or adapted to carry out a method according to one of the claims 1 to 5.

## Revendications

1. Procédé de saisie au moins partiellement automatique d'au moins une information de contact d'un utilisateur de réseau de télécommunication dans un réseau de télécommunication par un terminal utilisable dans un réseau de télécommunication, le terminal comprenant un dispositif de saisie d'au moins une information biométrique d'une personne, comprenant les étapes de procédé suivantes de:
- saisir au moins une information biométrique de l'utilisateur de réseau de télécommunication,
- envoyer l'information biométrique saisie, ensemble avec au moins une information de contact de l'utilisateur de réseau de télécommunication dans le réseau de télécommunication, au réseau de télécommunication,
- stocker l'information biométrique et l'information de contact de l'utilisateur de réseau de télécommunication, qui sont associées l'une à l'autre, par le réseau de télécommunication dans une base de données,
- saisir au moins une information biométrique d'une personne par le terminal,
- envoyer l'information saisie au réseau de télécommunication,
- recevoir le message comprenant au moins une information biométrique d'une personne du réseau de télécommunication,
- comparer l'information biométrique reçue par moyen du message avec une information biométrique d'utilisateurs de réseau de télécommunication, laquelle est gérée dans au moins une base de données, par le réseau de télécommunication, au moins une information de contact de l'utilisateur de réseau de télécommunication dans le réseau de télécommunication étant attribuée à au moins une information biométrique d'un utilisateur de réseau de télécommunication dans la base de données,
- envoyer un message comprenant l'au moins une information de contact au terminal, qui a envoyé le message reçu, si l'information biométrique reçue coïncide avec une information biométrique gérée dans la base de données,
- recevoir le message comprenant au moins une information de contact de la personne dans le réseau de télécommunication par le terminal, et
- stocker l'information de contact de la personne dans un réseau de télécommunication reçue du réseau de télécommunication par moyen du terminal,
**caractérisé en ce que**
l'envoi de l'information biométrique saisie ensemble avec au moins une information de contact de l'utilisateur de réseau de télécommunication dans le réseau de télécommunication au réseau de télécommunication, l'envoi de l'information saisie au réseau de télécommunication,
la réception du message comprenant au moins une information biométrique d'une personne du réseau de télécommunication, et
la réception du message comprenant au moins une information de contact de la personne dans le réseau de télécommunication par le terminal
se font à l'aide d'un service de messages du réseau de télécommunication, un service de messages courts, SMS, et/ou un service de messages multimédia, MMS, étant prévu comme service de messages du réseau de télécommunication,
le terminal d'un utilisateur (A) saisissant l'information biométrique d'un autre utilisateur (B) **en ce que** l'information biométrique de l'autre utilisateur (B) est saisie par le dispositif de saisie d'au moins une information biométrique d'une personne du terminal de l'utilisateur (A) et le terminal de l'utilisateur (A) transmet l'information biométrique saisie de l'autre utilisateur (B) au réseau de télécommunication.

2. Procédé selon la revendication 1, **caractérisé en ce que** l'information de contact comprend le numéro d'appel, MSISDN, de l'utilisateur de réseau de télécommunication dans un réseau de télécommunication.

3. Procédé selon la revendication 1 ou la revendication 2, **caractérisé en ce que** l'au moins une base de données est une base de données du réseau de télécommunication, mais au moins une base de données accessible via le réseau de télécommunication.

4. Procédé selon l'une des revendications 1 à 3, **caractérisé en ce que** le dispositif de saisie d'au moins une information biométrique d'une personne est un dispositif de balayage pour l'enregistrement d'empreintes digitales.

5. Procédé selon l'une des revendications 1 à 4, **caractérisé en ce que** le réseau de télécommunication est un réseau radio mobile selon un standard de réseau radio GSM, GPRS et/ou UMTS.

6. Terminal destiné à l'utilisation dans un réseau de télécommunication, comprenant un dispositif de saisie d'au moins une information biométrique d'une personne,
**caractérisé en ce que**
celui-ci est configuré pour et/ou adapté à exécuter un procédé selon l'une des revendications 1 à 5.

7. Terminal selon la revendication 6, **caractérisé en ce que** celui-ci est un terminal mobile.

8. Noeud de réseau d'un réseau de télécommunication,
**caractérisé en ce que**
celui-ci est configuré pour et/ou adapté à exécuter un procédé selon l'une des revendications 1 à 5.
